Europäisches Patentamt

European Patent Office

Office européen des brevets

(19)

(11) Numéro de publication: **0 373 031**
**A1**

## (12) DEMANDE DE BREVET EUROPEEN

(21) Numéro de dépôt: **89403267.1**

(22) Date de dépôt: **27.11.89**

(51) Int. Cl.5: **C08L 5/00, E21B 43/22**

(30) Priorité: **07.12.88 FR 8816050**

(43) Date de publication de la demande:
**13.06.90 Bulletin 90/24**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Cros, Patrick**
**1, rue des Monnaies- Collectif Champs**
**Persé**
**F-79500 Melle(FR)**
Inventeur: **Meunier, Michel-Georges**
**4, rue des Aulnes**
**37550 Saint-Avertin(FR)**

(74) Mandataire: **Cazes, Jean-Marie et al**
**RHONE-POULENC CHIMIE Service Brevets**
**Chimie 25, Quai Paul Doumer**
**F-92408 Courbevoie Cédex(FR)**

(54) **Homopolysaccharide et solution le contenant, leur procédé de préparation, ainsi que leur procédé d'utilisation dans la récupération assistée du pétrole.**

(57) Homopolysaccharide et solution le contenant pouvant être obtenus à partir d'une composition à base d'un homopolymère premier qui est traité thermiquement après que son pH ait été ajusté à une valeur supérieure à 9.

L'invention concerne également un procédé de préparation desdits homopolysaccharide et solution, ainsi que leur application dans le domaine de la récupération assistée du pétrole.

EP 0 373 031 A1

## HOMOPOLYSACCHARIDE ET SOLUTION LE CONTENANT LEUR PROCEDE DE PREPARATION AINSI QUE LEUR PROCEDE D'UTILISATION DANS LA RECUPERATION ASSISTEE DU PETROLE

La présente invention concerne un homopolysaccharide, une solution contenant ledit homopolysaccharide, leur procédé de préparation, ainsi que leur procédé d'utilisation dans la récupération assistée du pétrole.

On connaît l'application dans le domaine de la récupération assistée du pétrole de certains polysaccharides, autrement appelés biopolymères, et notamment d'hétéropolysaccharides du type gomme xanthane.

La pétrole accumulé dans les formations souterraines ne peut généralement être totalement récupéré par la seule utilisation de la pression interne à laquelle est soumise naturellement la nappe pétrolifère.

Des opérations complémentaires sont nécessaires quand on veut récupérer la presque totalité du pétrole. Fréquemment on injecte alors un fluide par des puits d'injection. Ces fluides souvent à base d'eau salée ou saumure, permettent de déplacer le pétrole souterrain vers les puits de production.

Les polysaccharides permettent d'épaissir l'eau qui déplace ainsi facilement les formations pétrolifères.

La gomme xanthane est donc l'un des polysaccharides les plus utilisé dans ce type d'opérations.

La gomme xanthane présente cependant l'inconvénient de perdre son pouvoir épaississant quand on l'emploie à des températures supérieures à 70-80° C.

De plus, l'injectabilité de la gomme xanthane dans les formations poreuses souterraines renfermant le pétrole est généralement mauvaise.

En effet, les pores sont rapidement bouchés et de ce fait la récupération du pétrole est entravée.

L'application à la récupération assistée du pétrole d'homopolysaccharides a également été envisagée.

Ainsi le brevet des Etats-Unis d'amérique N° 3.372.749 décrit une telle application d'un homopolysaccharide du type scléroglucane.

Ce polysaccharide présente l'avantage sur la gomme xanthane, de conserver un pouvoir épaississant quand il est soumis à une gamme plus large de température. Toutefois, l'injectabilité du schléroglucane pose le même problème que celle de la gomme xanthane.

Afin d'obvier les inconvénients des composés connus, la demanderesse a mis au point une solution à base d'un homopolysaccharide, ainsi qu'un homopolysaccharide pouvant être obtenu à partir de cette solution, qui présentent une injectabilité supérieure auxdits composés connus et qui en outre présentent une résistance à une gamme étendue de température, ainsi que de très bonnes propriétés viscosifiantes.

Un autre objet de l'invention est un procédé de préparation de ladite solution et dudit homopolysaccharide.

Un troisième objet de l'invention est un procédé d'utilisation de la solution et de l'homopolysaccharide dans la récupération assistée du pétrole.

L'invention concerne donc une solution à base d'un homopolysaccharide non réticulé formé d'une chaîne principale homopolymère comprenant soit des motifs pyranose, soit des motifs furanose et sur laquelle sont greffés ou non des chaînes latérales comportant les mêmes motifs pyranose ou furanose, ladite solution étant caractérisée en ce qu'elle est susceptible d'être obtenue par un procédé comprenant les étapes suivantes :

a) on traite thermiquement une composition à base d'un homopolysaccharide premier après avoir ajusté le pH de ladite composition à une valeur supérieure à 9, puis

b) on sépare ladite solution de ladite composition.

Le procédé dont il est question ci-dessus concerne une voie de préparation de la solution selon l'invention. Toutefois, l'invention concerne bien ladite solution obtenue par tout procédé.

On entend ici par homopolysaccharide premier, un homopolysaccharide classiquement obtenu par fermentation d'un milieu renfermant au moins un hydrate de carbone assimilable par un microorganisme.

La composition décrite ci-dessus peut donc consister en un moût de fermentation préparé de façon connue en soi.

La composition peut également être un moût de fermentation reconstitué qui est obtenu de manière classique par dissolution en solution aqueuse d'une poudre provenant d'un moût de fermentation.

Avantageusement la composition consiste en un moût de fin de fermentation.

Pour une bonne réalisation de l'invention, quand la composition est un moût de fermentation ou un moût de fermentation reconstituée, est contient de 0,1 à 25 % et de préférence de 0,3 à 10 % en poids de matières sèches.

Généralement ces matières sèches sont constituées de 1 à 70 % et de préférence de 1 à 50 % de leur poids, d'un ballast comprenant principalement des débris cellulaires.

Dans le cadre de l'invention, les microorganismes utilisés pour produire ladite composition peuvent être

2

choisis dans les genres suivants :
Sclerotium, Corticium, Sclerotinia, Stromatinia.

Les hydrates de carbone contenus dans le milieu fermenté par lesdits microorganismes peuvent être du type :

saccharose, D-xylose, D-mannose, D-glucose, L-arabinose, D-galactose, D-fructose, maltose, mélézitose, raffinose, méthylbêta-maltoside, esculine, cellobiose, tréhalose, L-rhamnose, glycérol, cellulose et xylanne.

Avantageusement, ledit milieu ne renferme qu'un seul hydrate de carbone.

Ledit milieu peut également renfermer au moins une source d'azote organique et/ou minéral, ainsi qu'un ou plusieurs sels minéraux.

D'une manière préférentielle, la solution selon l'invention est obtenue par traitement d'une composition à base d'un homopolysaccharide premier qui est le scléroglucane.

Le scléroglucane est un homopolysaccharide bien connu qui peut être obtenu par fermentation d'un milieu renfermant un hydrate de carbone par un microorganisme de l'espèce Sclerotium rolfsii.

Dans le cadre de la présente invention, ladite composition est traitée thermiquement après que son pH ait été ajusté préférentiellement à une valeur supérieure ou égale à 10 et plus préférentiellement encore à une valeur comprise entre 10 et 12.

L'alcalinité désirée peut être obtenue à l'aide d'une base forte du type soude, chaux, ammoniaque ou potasse. Comme indiqué ci-dessous, l'emploi de chaux peut être particulièrement avantageux.

Le traitement thermique est généralement réalisé à une température supérieure à 60°C, de préférence supérieure ou égale à 70°C et plus préférentiellement encore à une température comprise entre 80° et 130°C.

Le traitement thermique peut être effectué pendant au moins 3 min., de préférence pendant 5 à 90 min. et plus préférentiellement pendant 8 à 60 min. Après l'étape a) du traitement thermique mais avant l'étape b) de séparation, on peut avantageusement dilacérer la composition. Généralement, la dilacération est effectuée après refroidissement de la composition à la température ambiante.

La dilacération peut être réalisée par cisaillement mécanique, par exemple au moyen d'un malaxeur WARING[R] blender ou d'une pompe dilacératrice de type YSTRAL[R] ou WEMCO[R] ou avec tout autre appareillage produisant un fort cisaillement. La dilacération peut être menée pendant 1 à 30 min., de préférence pendant 1 à 10 min., à une vitesse de 500 à 2000 RPM.

Suite au traitement thermique, et de préférence après dilacération, on peut éventuellement neutraliser la composition jusqu'à un pH voisin de la neutralité au moyen d'un acide tel que l'acide nitrique, l'acide sulfurique ou l'acide acétique.

Suite à l'étape a) de traitement thermique mais avant l'étape b) de séparation, on peut diluer la composition de sorte que sa concentration en matières sèches soit comprise entre 0,5 et 5 g/l et de préférence comprise entre 0,5 et 2 g/l.

La dilution est avantageusement réalisée après dilacération et l'éventuelle neutralisation de la composition. La dilution peut se faire à température ambiante, généralement par ajout d'eau courante, adoucie ou déminéralisée.

Lorsque la composition est un moût de fermentation provenant de la fermentation d'un hydrate de carbone par certains microorganismes et notamment par Sclerotium rolfsii, on a pu constater la présence d'ions oxalates.

Ces ions peuvent constituer une gêne, notamment dans le domaine de la récupération assistée du pétrole. Un moyen d'éliminer ces ions consiste à ajuster le pH de la composition dans l'étape a) au moyen d'une base contenant du calcium, telle la chaux.

Dans le cas où une autre base a été employée, il est particulièrement avantageux, d'éliminer les ions oxalates par précipitation au moyen d'un sel de calcium, tel que le chlorure de calcium.

Généralement on utilise de 0,05 à 50 g et de préférence de 0,1 à 10 g de sel de calcium par 1 de composition.

L'ajout du sel de calcium se fait soit avant, soit de préférence immédiatement après l'étape de dilution, quand le milieu est alors moins visqueux.

L'étape b) de séparation a pour but principal d'obtenir une solution selon l'invention qui est débarrassée des impuretés telles que les débris cellulaires ou un éventuel précipité d'oxalate.

L'étape b) est réalisée soit par filtration effectuée avantageusement sur une membrane recouverte d'une précouche d'adjuvant de filtration, soit préférentiellement par centrifugation.

L'opération de centrifugation est généralement effectuée sous un champ gravitationnel supérieur à 100 g, de préférence supérieur à 150 g, généralement compris entre 150 et 4 500 g, pendant une durée de 30 secondes à 60 minutes et de préférence entre 5 et 30 minutes.

Après centrifugation on récupère un surnageant qui est la solution selon l'invention.

3

Cette solution peut être ensuite concentrée par ultrafiltration et/ou évaporation afin de faciliter son conditionnement, son stockage et son transport.

La solution concentrée peut présenter un taux de 5 à 40 % en poids de matières sèches.

La présente invention concerne également un nouvel homopolysaccharide.

Ledit homopolysaccharide est caractérisé en ce qu'il est susceptible d'être obtenu par extraction à partir d'une solution telle que définie ci-dessus.

L'extraction de l'homopolysaccharide peut se faire par précipitation dans les conditions standards par un alcool du type méthanol, éthanol ou isopropanol. On utilise habituellement 1 à 6 volumes d'alcool par volume de solution. On récupère généralement l'homopolysaccharide sous la forme d'une poudre.

Dans un cadre secondaire de l'invention on peut ajouter à ladite composition, un biocide et ceci avant ou après l'étape a). Le biocide permet une protection de l'homopolysaccharide contre les dégradations microbiennes.

Ces biocides peuvent être du type : formol, azoture de sodium, 2,4,6, trichlorophénate de sodium.

L'invention concerne également un procédé d'utilisation d'une solution ou de l'homopolysaccharide tels que décrits ci-dessus, dans la récupération assistée du pétrole.

On utilise ladite solution ou ledit homopolysaccharide dilué dans une solution aqueuse, de sorte que la concentration en homopolysaccharide dans ladite solution aqueuse soit comprise entre 0,1 et 2 g/l. Avantageusement la solution aqueuse est un saumure contenant des sels minéraux du type NaCl, $MgCl_2$, $CaCl_2$ ; ladite saumure provenant du gisement pétrolifère à exploiter. Les solutions aqueuses ainsi préparées présentent une injectabilité remarquable.

Exemple 1

Par fermentation par SCLEROTIUM rolfsii sur un milieu contenant du glucose comme seule source de carbone et des extraits de levures comme source d'azote organique, on obtient un moût de fin de fermentation contenant 30 g/kg de matières sèches constituées de:
- 12 g/kg de ballast cellulaire
- et de 18 g/kg de scléroglucane

Ce moût de fin de fermentation est à pH 6.

On prélève 1 000 g de ce moût que l'on sépare en deux fractions A et B, de 500 g chacune.

La fraction A est ajustée à pH 10 par ajout de soude normale.

La fraction A alcalinisée, est ensuite versée dans un ballon de 1 litre que l'on place à l'autoclave à 100°C pendant 45 minutes ; puis on la refroidie à température ambiante.

Les fractions A et B sont alors toutes deux soumises à une opération de broyage et de dilacération dans un mixer de type WARING[R] blender, pendant 5 minutes à 12 000 RPM.

On ajuste le pH de la fraction A à pH 7 avec de l'acide sulfurique normal.

On dilue parallèlement les deux fractions A et B avec une saumure contenant : NaCl à 9 %

$CaCl_2$ à 0,5 %

$MgCl_2$ à 0,5 %

jusqu'à obtention d'une concentration finale en homopolysaccharide de 1 g/l.

Les solutions ainsi obtenues, sont ensuite centrifugées 30 minutes sous un champ gravitationnel de 4 500 g, dans une centrifugeuse de laboratoire de type MSE[R] "high Speed".

On teste alors le pouvoir viscosifiant et l'injectabilité des solutions surnageantes obtenues à partir des deux fractions A traitée et B non traitée.

Les résultats de ces tests sont donnés dans le tableau I suivant :

4

## TABLEAU I

| | Viscosité à 25°C | Filtrabilité sur : | | | Viscosité après filtration sur 1,2 $\mu$Versapor |
|---|---|---|---|---|---|
| | | 12 $\mu$ Sartorius | 5 $\mu$ Millipore | 1,2 $\mu$ Versapor Gelman après passage sur 5 $\mu$ Millipore | |
| surnageant provenant de la fraction B non traitée | 71 mPa/s | colmatage avec 140 ml de surnageant | colmatage immédiat avec 50 ml de surnageant | (-) | (-) |
| surnageant provenant de la fraction A traitée | 65 mPa/s | 1l en 30 s | 1l en 3min et 45 s | 1l en 3min et 45 s | 58 mPa/s |

EP 0 373 031 A1

- Le pouvoir viscosifiant est mesuré au moyen d'un viscosimètre Brookfield de type LVT équipé d'un adapteur UL, à 25 % et à un gradient de vitesse de 7,3 s$^{-1}$.

- L'injectabilité des solutions surnageantes est appréciée par la mesure de leur capacité de filtration sur des membranes de porosité calibrée.

Il est en effet bien connu que ce type de mesure reflète tout à fait correctement l'injectabilité de solution de biopolymère.

Les membranes SARTORIUS$^R$ de 47 mm de diamètre et de 12 $\mu$ de porosité sont utilisées sous une pression de 3 bar pour un test grossier.

Les membranes Millipore MF$^R$ de 5 $\mu$ de porosité, ou VERSAPOR$^R$ (commercialisées par GELLMAN$^R$) de 1,2 $\mu$ de porosité sont utilisées sous 3 bar de pression, dans des tests plus fins. Ainsi la membrane MILLIPORE$^R$ de 5 $\mu$ de porosité permet d'estimer l'injectabilité de la solution à l'entrée de la formation poreuse, où le gradient de cisaillement est le plus important. La membrane VERSAPOR$^R$ de 1,2 $\mu$ de porosité, permet d'estimer l'injectabilité de la solution en profondeur.

Exemple 2

Un moût de fermentation obtenu dans les mêmes conditions que celles décrites dans l'exemple 1 et contenant 32 g/kg de matières sèches constituée de :

- 23 g/kg de scléroglucane
- 9 g/kg de ballast cellulaire

est réparti dans 5 récipients différents constituants 5 échantillons. Ces échantillons sont traités dans les conditions de températures et de pH figurant dans le tableau II suivant :

TABLEAU II

| échantillon | pH | Température (en °C) | Durée du traitement en mm |
|---|---|---|---|
| A | 10 | 100 | 45 |
| B | 9 | 100 | 45 |
| C | 10 | 80 | 45 |
| D | 12 | 60 | 45 |
| E | 10 | 100 | 5 |

Les échantillons ainsi traités sont ensuite dilacérés, dilués et centrifugés dans les mêmes conditions que celles décrites dans l'exemple 1.

Le pouvoir viscosifiant et l'injectabilité des solutions surnageantes desdits échantillons, sont appréciés dans les mêmes conditions que celles décrites dans l'exemple 1.

Les résultats obtenus figurent dans le tableau III suivant :

TABLEAU III

| Echantillons | Viscosité à 25°C en mPa.s | Filtrabilité sur : | | | Viscosité après filtration sur 1,2 μ Versapor |
|---|---|---|---|---|---|
| | | 12 μ Sartorius | 5 μ Millipore | 1,2 μ Versapor Gelman | |
| A | 70 | 1l en 40s | 1l en 3min et 20s | 1l en 3min | 64 |
| B | 71 | Colmatage avec 800ml de surnageant | Colmatage avec 300ml | - | - |
| C | 75 | 1l en 40s | 1l en 3min et 30s | 1l en 2min et 50s | 71 |
| D | 68 | Colmatage avec 600ml | Colmatage immédiat | - | - |
| E | 73 | 1l en 40s | 1l en 10 min. | 1l en 2min | 65 |

EP 0 373 031 A1

## Revendications

1. Solution à base d'un homopolysaccharide non réticulé formé d'une chaîne principale homopolymère comprenant soit des motifs pyranose, soit des motifs furanose et sur laquelle sont greffés ou non des chaînes latérales comportant les mêmes motifs pyranose et furanose, ladite solution étant caractérisée en ce qu'elle est susceptible d'être obtenue par un procédé comprenant les étapes suivantes :
   a) on traite thermiquement une composition à base d'un homopolysaccharide premier après avoir ajusté le pH de ladite composition à une valeur supérieure à 9, puis
   b) on sépare ladite solution de ladite composition.

2. Solution selon la revendication 1 caractérisée en ce que l'on dilacère ladite composition après l'étape a), mais avant l'étape b).

3. Solution selon l'une des revendications 1 et 2 caractérisée en ce qu'en outre, on dilue ladite composition après l'étape a) mais avant l'étape b), de sorte que sa concentration en matières sèches soit comprise entre 0,5 et 5 g/l et de préférence comprise entre 0,5 et 2 g/l.

4. Solution selon l'une des renvendications 1 à 3 caractérisée en ce que ledit homopolysaccharide premier est le scléroglucane.

5. Homopolysaccharide caractérisé en ce qu'il est susceptible d'être obtenu par extraction à partir d'une solution telle que définie dans l'une des revendications 1 à 4.

6. Procédé de préparation d'une solution telle que définie dans l'une des revendications 1 à 4 caractérisé en ce qu'il comprend les étapes suivantes :
   a) on traite thermiquement une composition à base d'un homopolysaccharide premier après avoir ajusté le pH de ladite composition à une valeur supérieure à 9, puis
   b) on sépare ladite solution de ladite composition.

7. Procédé selon la revendication 6 caractérisé en ce que l'on ajuste le pH à une valeur supérieure ou égale à 10, de préférence comprise entre 10 et 12.

8. Procédé selon l'une des revendications 6 et 7 caractérisé en ce que l'on ajuste le pH au moyen de chaux.

9. Procédé selon l'une des revendications 6 à 8 caractérisé en ce que l'on traite thermiquement ladite composition à une température supérieure à 60° C, de préférence supérieure à 70° et plus préférentiellement comprise entre 80 et 130° C.

10. Procédé selon l'une des revendications 6 à 9 caractérisé en ce que l'on traite thermiquement ladite composition pendant au moins 3 min., de préférence pendant 5 à 90 min., et plus préférentiellement pendant 8 à 60 min.

11. Procédé selon l'une des revendications 6 à 10 caractérisé en ce que l'on dilacère ladite composition après l'étape a) mais avant l'étape b).

12. Procédé selon la revendication 11 caractérisé en ce que l'on dilacère ladite composition par cisaillement mécanique pendant 1 à 30 min., de préférence pendant 2 à 10 min.

13. Procédé selon l'une des revendications 6 à 12 caractérisé en ce que l'on dilue ladite composition après l'étape a) mais avant l'étape b), de sorte que sa concentration en matière sèche soit comprise entre 0,5 et 5 g/l et de préférence comprise entre 0,5 et 2 g/l.

14. Procédé selon l'une des revendications 6 à 13 caractérisé en ce qu'après l'étape a) mais avant l'étape b), on neutralise ladite composition au moyen d'un acide tel que l'acide nitrique, l'acide sulfurique ou l'acide acétique.

15. Procédé selon l'une des revendications 6 à 14 caractérisé en ce qu'après l'étape a), mais avant l'étape b), on introduit dans ladite composition un sel de calcium tel que le chlorure de calcium.

16. Procédé selon la revendication 15 caractérisé en ce qu'on introduit le sel de calcium après avoir dilué ladite composition.

17. Procédé selon l'une des revendications 6 à 16 caractérisé en ce que l'on utilise une composition qui est soit un moût de fermentation, soit un moût de fermentation reconstitué.

18. Procédé selon la revendication 17 caractérisé en ce que l'on obtient ledit moût de fermentation ou ledit moût de fermentation reconstitué par fermentation par un microorganisme d'un seul hydrate de carbone.

19. Procédé selon la revendication 18 caractérisé en ce que l'on utilise un moût de fermentation ou un moût de fermentation reconstitué, contenant de 0,1 à 25 % et de préférence de 0,3 à 10 % en poids de matière sèche.

20. Procédé selon l'une des revendications 6 à 19 caractérisé en ce que l'on réalise l'étape b) de séparation par filtration ou centrifugation.

21. Procédé de préparation d'un homopolysaccharide caractérisé en ce que l'on extrait ledit homopolysaccharide d'une solution telle que préparée selon le procédé défini dans l'une des revendications 6 à 20.

22. Procédé selon la revendication 21 caractérisé en ce que l'on extrait ledit homopolysaccharide par précipitation au moyen d'un alcool tel que le méthanol, l'éthanol ou l'isopropanol.

23. Procédé d'utilisation dans la récupération assistée du pétrole soit d'une solution telle que définie dans l'une des revendications 1 à 4 ou telle que préparée selon le procédé défini dans l'une des revendications 6 à 20, soit d'un homopolysaccharide tel que défini dans la revendication 5 ou tel que préparé selon le procédé défini dans l'une des revendications 21 à 22.

24. Procédé selon la revendication 23 caractérisé en ce que l'on utilise ladite solution ou ledit homopolysaccharide, dilué dans une solution aqueuse de telle sorte que la concentration en homopolysaccharide dans ladite solution aqueuse soit comprise entre 0,1 et 2 g/l.

25. Procédé selon la revendication 24 caractérisé en ce que l'on utilise une solution aqueuse qui est une saumure provenant d'un gisement pétrolifère.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 964 972 (J.T. PATTON) <br> * Colonne 8, ligne 45 - colonne 9, ligne 30; revendication 1 * <br> --- | 1,6,23 | C 08 L 5/00 <br> E 21 B 43/22 |
| Y | FR-A-2 600 336 (INSTITUT FRANCAIS DU PETROLE) <br> * Abrégé * <br> ----- | 1,6,23 | |

DOMAINES TECHNIQUES
RECHERCHES (Int. Cl.5)

C 08 B
C 08 L
C 12 P

Le présent rapport a été établi pour toutes les revendications

| Lieu de la recherche | Date d'achèvement de la recherche | Examinateur |
|---|---|---|
| LA HAYE | 04-01-1990 | SOMERVILLE F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)